# EUROPEAN PATENT SPECIFICATION

(11) **EP 2 235 155 B1**
(45) Date of publication and mention of the grant of the patent: **16.05.2012**
(21) Application number: 07865729.3
(22) Date of filing: 17.12.2007
(51) Int. Cl.: C11D 9/02, C11D 9/26, C11D 9/38

(54) **CLEANSING BARS**
REINIGUNGSMITTEL IN SEIFENSTÜCKFORM
BARRE DE NETTOYAGE

(43) Date of publication of application: 06.10.2010
(73) Proprietor: Colgate-Palmolive Company, New York, NY 10022 (US)
(72) Inventor: SCALA, Diana, Hillsborough NJ 08844 (US)
(74) Representative: Jenkins, Peter David
(86) International application number: PCT/US2007/087695
(87) International publication number: WO 2009/078857

(56) References cited:
- WO-A-99/48472
- WO-A-2005/100532
- US-A1- 2004 087 668
- US-B1- 6 723 690

## Description

### BACKGROUND OF THE INVENTION

Various bar aesthetics have been used in marketed products such as striated, marbled, mottled, and variegated cleansing bars. Bars having a striped or marbled appearance are present in the marketplace such as, for example, IRISH SPRING® bar soap from Colgate-Palmolive Co., COAST® Soap from Procter and Gamble, SKIN SO SOFT® by Avon, DOVE NUTRIUM® from Unilever and other specialty products including "Lavendel" from Kappus, a German product imported into the United States, and Apothary Stone Washed Refining Soap by Yardley London.

Although variety of soap bars are available in the marketplace, delivery of benefit agents to the skin has proven difficult in the conventional bars owing to hydrophobic benefit agent interacting with hydrophobic portions of the surfactant portions of the soap chip. Besides, those conventional soap bars that are not produced using co-extrusion technology typically use color solutions to get the desired visual effect and are done so for visual aesthetic purposes only. Consequently, there is a need for formulating cleansing soap bars that achieve similar visual aesthetic effects while providing multiple benefits such as soap mildness, enhanced deposition of hydrophobic actives to skin, leaving skin feeling smooth, and providing a massaging tool while showering.

### BRIEF SUMMARY OF THE INVENTION

The invention is based in part on the finding that a combination of hydrophobic ingredients comprising wax, sunflower oil, and myristyl myristate in a cleansing bar can provide enhanced deposition of hydrophobic benefit agents to the skin.

In a first exemplary embodiment the invention is a cleansing bar composition according to claim 1, the cleansing bar composition comprising:
a) a soap; and
b) a wax having a melting point of 50°C to 75°C, sunflower oil, and myristyl myristate.

In a second exemplary embodiment, the invention includes a method according to claim 14 of preparing cleansing bar containing wax blend including:
a) heating a wax having a melting point of 50°C to 75°C until melting and creating a wax melt solution;
b) introducing sunflower oil, myristyl myristate, and optionally at least one material chosen from propylene glycol and a hydrophobic benefit agent into the wax melt solution while heating;
c) stirring to obtain a homogenous solution;
d) cooling the solution;
e) introducing the homogenous solution into a soap component during extrusion; and
f) extruding to form a cleansing bar.

Preferred features are defined in the dependent claims.

In one embodiment, the wax is beeswax.

### DETAILED DESCRIPTION OF THE INVENTION

Unless otherwise specified, all percentages and amounts expressed herein and elsewhere in the specification should be understood to refer to percentages by weight. Also, the term "about," when used in reference to a range of values, should be understood to refer to either value in the range, or to both values in the range. As used throughout, ranges are used as shorthand for describing each and every value that is within the range. Any value within the range can be selected as the terminus of the range.

As used herein, the term "cleansing bar" shall include soap bars for cleansing and personal hygienic use comprising a cleansing soap material.

As used herein, the term "beeswax" shall include the white or yellow to grayish-brown wax secreted by the honeybee for constructing honeycombs, commercial wax obtained by processing and purifying the crude wax of the honeybee, and synthetic beeswax. Examples of beeswax that can be used include, but are not limited to, beeswaxes available from Strahl & Pitsch, such as S&P 422, 424, or 426 or synthetic version S&P 772.

In one embodiment, the present invention relates to cleansing bars containing a hydrophilic soap chip component and a blend of hydrophobic ingredients including beeswax, sunflower oil, and myristyl myristate and optionally including other benefit agents that can provide multiple benefits such as for example, providing visual aesthetics, smoothness, soap mildness, and enhanced deposition of hydrophobic actives to the skin

In one exemplary embodiment the invention is cleansing bar composition including:
a) a hydrophilic soap component; and
b) a wax having a melting point of 50°C to 75°C, sunflower oil, and myristyl myristate.

### Soap Component

The cleansing bar of the present invention includes a soap component. In certain embodiments the soap component is a hydrophilic soap chip (e.g., "a base component"). Reference is made to U.S. Patent 6,383,999 (Coyle et al.) and U.S. Patent 6,248,703 (Finucane et al.) each of which disclose soap components of a cleansing soap bar. The term "soap" or "soap chip" is used herein in its popular sense, i.e., the alkali metal or alkanol ammonium salts of aliphatic alkane or alkene monocarboxylic acids. Sodium, potassium, mono-, di- and tri-ethanol ammonium cations, or combinations thereof, are suitable for purposes of this invention. In general, sodium soaps are used in the compositions of this invention, but from about 1% to about 25% of the soap may be ammonium, potassium, magnesium, calcium or a mixture of these soaps.

The soap chips useful herein for the purpose of this invention also include but are not limited to the well known alkali metal salts of aliphatic (alkanoic or alkenoic) acids having about as 8 to 22 carbon atoms alkyl, preferably 10 to 20 carbon atoms alkyl chain. These may be described as alkali metal carboxylates of acrylic hydrocarbons having about 12 to about 22 carbon atoms. Any other surfactant can also be present in the soap chip which include but are not limited to sulfate, sulfonate alpha olefin sulfonates, isethionates such as SCI, taurates, sulfosuccinate, phosphates, glycinates, amphoteric surfactants such as betaines, sulfobetaines and the like and nonionic surfactants such as alkanolamide, alkylpolyglycosides and all those surfactants, in general, mentioned in Colgate's U.S. Patent No. 5,139,781, column 5, line 35 to column 11, line 46.

In one exemplary embodiment the cleansing bar of this invention includes at least about 70% by weight of soap active compounds.

In an alternate exemplary embodiment the hydrophilic soap chip of the composition of this invention consists essentially of anionic surfactant, non-ionic surfactants, amphoteric surfactants, cationic surfactants and mixtures thereof.

### Blend of Hydrophobic Ingredients

One embodiment further includes a hydrophobic blend of ingredients in the cleansing bar which delivers multiple benefits. The hydrophobic blend includes wax, sunflower oil, and myristyl myristate that provides a positive effect to the substrate being cleaned, e.g., the skin. In certain embodiments the hydrophobic blend additionally includes one or more of a hydrophobic benefit agent, propylene glycol, and chromium oxide green. The blend of hydrophobic component maybe incorporated uniformly within the soap chip.

In one embodiment, the combination of wax, sunflower oil, and myristyl myristate (hydrophobic blend) is present in the bar in an amount of 1% to 5% by weight.

In one embodiment, the combination of wax, sunflower oil, and myristyl myristate (hydrophobic blend) includes beeswax in an amount of 25 to 37% by weight. In another embodiment, the amount is 28 to 34% by weight.

In one embodiment, the combination of wax, sunflower oil, and myristyl myristate (hydrophobic blend) includes sunflower oil in an amount 7% to 47% by weight of sunflower oil.

In one embodiment, the combination of wax, sunflower oil, and myristyl myristate (hydrophobic blend) includes myristyl myristate in an amount of 15% to 24% by weight.

In some embodiments, a hydrophobic benefit agent is further included in the combination of wax, sunflower oil, and myristyl myristate (hydrophobic blend). When present, the hydrophobic benefit agent can be present in an amount of 0.001 to 10% by weight. Any desired hydrophobic benefit agent can be included in the blend. The blend aids in deposition of the hydrophobic benefit agent to the skin.

In some embodiments, the combination of wax, sunflower oil, and myristyl myristate (hydrophobic blend) additionally include water-miscible organic solvents. The water miscible solvent can be one or more polyhydric alcohols. Exemplary polyhydric alcohols species include, but are not limited to, propylene glycol and/or polyethylene glycol.

In one embodiment, the combination of wax, sunflower oil, and myristyl myristate (hydrophobic blend) includes the following ingredients: beeswax in an amount of 28% to 34% by weight; sunflower oil in an amount of 7% to 47% by weight; myristyl myristate in an amount of 15% to 24% by weight; optionally a hydrophobic benefit agent; and optionally propylene glycol.

In another embodiment, the combination of wax, sunflower oil, and myristyl myristate (hydrophobic blend) of wax and sunflower oil are in a ratio of 1:1 to 1:6.

The myristyl myristate in the combination of wax, sunflower oil, and myristyl myristate (hydrophobic blend) allows the blend to wash/wear at a similar rate as soap. This allows the bar to remain smooth. Without myristyl myristate in the blend, the blend is hard, and the bar will become bumpy after wear.

The combination of wax, sunflower oil, and myristyl myristate (hydrophobic blend) may be used in any type of bar soap, which includes syndets and combars.

### Other Ingredients

Optional ingredients can be present in the cleansing bar composition. Non-limiting examples include skin conditioning agents, moisturizing agents, fragrance, dyes and pigments, titanium dioxide, chelating agents such as EDTA, sunscreen active ingredients such as butyl methoxy benzoylinethane, polyols such as polyethylene glycols; antiaging compounds such as alpha hydroxy acids, beta hydroxy acids; antimicrobial materials such as triclocarban, triclosan and the like, preservatives such as hydantoins, imidazolines; vitamins such as A, E, K and C; essential oils and extracts thereof such as rosewood and jojoba, particulate matter such as polyethylene beads, jojoba beads, lufa, or oat flour, and the mixtures of any of the foregoing components.

In one embodiment the cleansing bar includes fragrance in an amount of about 0.001% to about 2% by weight of the composition.

In one embodiment the cleansing bar includes titanium dioxide in an amount of about 0.01% to 1% by weight.

In one embodiment the cleansing bar includes one or more pigments, such as chromium oxide green, in an amount of about 0.001% to about 1% by weight.

### Preparation of Cleansing Bars

In one embodiment, the cleansing bar containing a combination of wax, sunflower oil, and myristyl myristate (hydrophobic blend)may be prepared by heating wax until melting and creating a wax melt solution (hydrophobic component); introducing other components including sunflower oil, myristyl myristate, optionally propylene glycol, optionally octyl methoxycinnamate, and optionally chromium oxide green into the wax melt solution while heating; stirring to obtain a homogenous solution; cooling the solution to 50 to 55°C; and introducing the homogenous solution into a soap component (hydrophilic component) during extrusion; and extruding to form a cleansing bar.

In one embodiment, the cleansing bar of this invention is prepared using (co)extrusion equipment (for example combining the two components). Reference is made to U.S. Patents 3,940,220 (D'Arcageli et al.), U.S. Patent 4,096,221 (Fischer et al.); U.S. Patent 7,128,901 (Jonas et al.), U.S. Patent 4, 318, 878 (Hornig); U.S. Patent 6,878,319 (Browne), each of which describe the process of extrusion and co-extrusion to form a soap bar. Typically, the co-extrusion equipment includes two separate pieces of extrusion equipment joined together by a common co-extrusion nozzle that combines the two streams of soap into a distinct striped or striated pattern.

### Cleansing Bar Shapes

The bars of this invention produced by the extrusion method may be of varying sizes and shapes such as ovoid or rectangular in shape with either a flat or curved profile as an overall appearance. It is to be noted that in certain embodiments of the invention, the initial surface of the bar may be either smooth or initially have some texture formed during the extrusion and/or pressing of the bar. Additionally, the hydrophobic components of the soap may be modified to produce various wearing properties and visual effects. During use, the smooth bar will develop appropriate ridges and the non-smooth bars will be able to have their texture enhanced. Bar compositions that wear unevenly create bumpy surface that massages the skin during washing and cleansing activities. The cleansing bar can wear evenly or unevenly. The cleansing bar can be marbled or striated. Also, the soap can be extruded through a shaped nozzle to form any desired shape, such as a star.

In other embodiments, the bar is one of a single phase bar, a dual phase bar, a striated bar, or a marbled bar. In some embodiments, the striation or the marbling is due to addition of the wax blend. In another embodiment in a dual phase bar, soap is in one phase and the other phase contains the wax blend.

In one embodiment, the cleansing bar can enhance the deposition of hydrophobic actives to the skin.

### EXAMPLES

Exemplary embodiments of the present invention will be illustrated by reference to the following examples, which are included to exemplify, but not to limit the scope of the present invention.

In the examples and elsewhere in the description of the invention, chemical symbols and terminology have their usual and customary meanings. Temperatures are in degrees Celsius unless otherwise indicated. The amounts of the components are in weight percents based on the standard described; if no other standard is described then the total weight of the composition is to be inferred. Various names of chemical components include those listed in the CTFA International Cosmetic Ingredient Dictionary (Cosmetics, Toiletry and Fragrance Association, Inc., 7th ed. 1997).

In the examples below, octyl methoxycinamate is used as a hydrophobic benefit agent.

Example 1: A cleansing bar composition is prepared including a hydrophilic component including 1) Soap Chip 96.7%; 2) Titanium oxide 0.55%; 3) Fragrance 1.65%; and a 1.1% hydrophobic component including i) beeswax; ii) sunflower oil; iii) chromium oxide green; with a ratio of beeswax: sunflower oil of about 1:1. The formulation is detailed under Table 1.

Example 2: A cleansing bar composition is prepared including a hydrophilic component including 1) Soap Chip 96%; 2) Titanium oxide 0.5%; 3) Fragrance 1.5%; and a 2% hydrophobic component including i) beeswax; ii) sunflower oil; iii) chromium oxide green; with a ratio of beeswax: sunflower oil of about 15:85. The formulation is detailed under Table 1.

Example 3: A cleansing bar composition is prepared including a hydrophilic component including 1) Soap Chip 96%; 2) Titanium oxide 0.5%; 3) Fragrance 1.5%; and a 2% hydrophobic component including i) beeswax 0.5%; ii) sunflower oil 1.0%; iii) myristyl myristate 0.45%, and propylene glycol 0.05%. The formulation is detailed under Table 1.

Example 4A: A cleansing bar composition is prepared including a hydrophilic component including 1) Soap Chip 96.4%; 2) Titanium oxide 0.5%; 3) Fragrance 1.5%; 4) octyl methoxycinnamate 1.6% and 0% hydrophobic (beeswax blend) component.

Example 4B: A cleansing bar composition is prepared including a hydrophilic component including 1) Soap Chip 94%; 2) Titanium oxide 0.5%; 3) Fragrance 1.5%; octyl methoxycinnamate 0% and a 4% hydrophobic (beeswax blend) component.

All bars in Examples 4A and 4B are prepared by adding the beeswax blend as part of the soap (non-striated) so that the benefit derived is not a result of the concentrated form of the beeswax blend found in certain portions of the bar.

**TABLE 1: Cleansing Bar Compositions**

| Ingredients | Example 1 wt% | Example 2 wt% | Example 3 wt% | Example 4A wt% | Example 4B wt% |
|---|---|---|---|---|---|
| Hydrophilic Component (Soap Chip) | 96.7 | 96 | 96 | 96 | 94 |
| Titanium Dioxide | 0.55 | 0.5 | 0.5 | 0.5 | 0.5 |
| Fragrance | 1.65 | 1.5 | 1.5 | 1.5 | 1.5 |
| Octyl methoxycinnamate (OMC) | - | - | - | 1.6 | - |
| Hydrophobic components including OMC (Beeswax Blend) | 1.1 | 2 | 2 | ---- | 4 |
| Texture during washing | Uneven wear; soap gets bumpy; exfoliating | Uneven wear; soap gets bumpy; exfoliating | Even wear, smooth bar | Single phase - not applicable | Single phase - not applicable |

Table 2 illustrates the cleansing bar formulations containing various beeswax blends for Example 4B.

**TABLE 2: Various Beeswax Blend for Example 4B**

| Sample | W | X | Y | Z |
|---|---|---|---|---|
| Beeswax | 27.9 | 27.9 | 27.9 | 33.6 |
| Sunflower Oil | 46.5 | 7.0 | 15.0 | 43.07 |
| Myristyl myristate | 23.26 | 23 | 15 | 2 |
| Propylene Glycol | 2.33 | 2.33 | 2.33 | 2.33 |
| Octyl methoxycinnamate (OMC) | --- | 39.77 | 39.77 | --- |

### Soap Mildness Assay

Soap mildness was measured *in vitro* using the collagen swelling assay. When the collagen film swells as a result of incubation with the soap solutions, it absorbs water. The order of collagen swelling observed is: control soap > Example 4B with Z blend > syndet (DOVE™ soap bar). The results show that the soap mildness is improved with the hydrophobic beeswax blend incorporated into the soap chip.

### Skin Deposition Assay

Deposition of actives was measured *in vitro* using Vitro Skin (IMS technologies) as the substrate. The soap bar of examples 4A and 4B were tested. The benefit agent, octylmethoxy cinnamate (OMC) deposited on the substrate was extracted using ethanol, dried down and reconstituted in methanol. The amount of OMC in the extract was measured using HPLC (high performance liquid chromatography) with methanol:water as the mobile phase. The results of the deposition on Vitro skin using the cleansing composition of Examples 4A and 4B (X and Y) are shown in table 3.

**Table 3: Deposition of Actives**

| **Tests** | **Deposition on Vitro Skin (µg/cm²)** |
|---|---|
| Example 4A (control) | 1.48 |
| Example 4B with beeswax blend **Y** | 1.67 (p ≤0.05) |
| Example 4B with beeswax blend **X** | 1.60 (p ≤0.05 |

The deposition on Vitro skin tests for Examples 4B with Hydrophobic Blend X and Y clearly show that cleansing bar with beeswax enhance the deposition of hydrophobic actives such as OMC into the skin compared to cleansing bar that does not contain the hydrophobic beeswax blend as evident from the greater quantity of actives assayed for Examples with beeswax blend with active ingredients.

### Skin Feel Tests

The cleansing soap bar was tested for smoothness. Eight test panelists were recruited for this study. Panelists were asked to wash one forearm with the cleansing soap of Example 4B (with the beeswax blend) and the contralateral arm with the control soap of Example 4A (soap without beeswax blend). Seven out of eight panelists preferred the arm washed with the beeswax blend and the reason cited most often was smoothness evidencing the benefits of beeswax blend soaps to the skin feel after use.

## Claims

1. A cleansing bar composition comprising:
a) a soap; and
b) a wax having a melting point of 50°C to 75°C, sunflower oil, and myristyl myristate.

2. The composition of claim 1, wherein the wax is beeswax.

3. The composition of claim 2, wherein the beeswax and sunflower oil are in a ratio of 1:1 to 1:6.

4. The composition of claim 2, wherein the beeswax, sunflower oil, and myristyl myristate are present in combination in an amount of 1% to 5% by weight of total cleansing bar composition.

5. The composition of claim 2, wherein the beeswax is present in the beeswax, sunflower oil, and myristyl myristate combination in an amount of 25 to 37% by weight, optionally wherein the beeswax is present in the beeswax, sunflower oil, and myristyl myristate combination in an amount of 28% to 34% by weight.

6. The composition of claim 2, wherein the sunflower oil is present in the beeswax, sunflower oil, and myristyl myristate combination in an amount of 7% to 47% by weight.

7. The composition of claim 2, wherein the myristyl myristate is present in the beeswax, sunflower oil, and myristyl myristate combination in an amount of 15% to 24% by weight.

8. The composition of claim 2 further comprising propylene glycol, optionally wherein the propylene glycol is present in the beeswax, sunflower oil, and myristyl myristate combination in an amount of 2% to 3% by weight.

9. The composition of claim 2 further comprising a hydrophobic benefit agent, optionally wherein the hydrophobic benefit agent is present in the beeswax, sunflower oil, and myristyl myristate combination in an amount of 0.001% to 10% by weight.

10. The composition of claim 1 further comprising titanium oxide in an amount of 0.1 % to 1% by weight.

11. The composition of claim 1 further comprising chromium oxide green.

12. The composition of claim 2, wherein a combination of beeswax, sunflower oil, and myristyl myristate comprises beeswax in an amount of 28% to 34% by weight; sunflower oil in an amount of 7% to 47% by weight; myristyl myristate in an amount of 15% to 24% by weight; propylene glycol in an amount of 2% to 3% by weight, and optionally a hydrophobic benefit agent.

13. The composition of claim 1, wherein the bar is one of a single phase bar, a dual phase bar, a striated bar, or a marbled bar.

14. A method of preparing a cleansing bar comprising:
a) heating a wax having a melting point of 50°C to 75°C until melting and creating a wax melt solution;
b) introducing sunflower oil, myristyl myristate, and optionally at least one material chosen from propylene glycol and a hydrophobic benefit agent into the wax melt solution while heating;
c) stirring to obtain a homogenous solution;
d) cooling the solution;
e) introducing the homogenous solution into a soap component during extrusion; and
f) extruding to form a cleansing bar.

15. The method of claim 14, wherein the wax is beeswax.

## Patentansprüche

1. Seifenstückzusammensetzung, umfassend:
a) eine Seife und
b) ein Wachs mit einem Schmelzpunkt von 50°C bis 75°C, Sonnenblumenöl und Myristyl Myristat.

2. Zusammensetzung nach Anspruch 1, wobei das Wachs Bienenwachs ist.

3. Zusammensetzung nach Anspruch 2, wobei das Bienenwachs und das Sonnenblumenöl in einem Verhältnis von 1:1 bis 1:6 vorliegen.

4. Zusammensetzung nach Anspruch 2, wobei das Bienenwachs, Sonnenblumenöl und Myristyl Myristat in einer Menge von 1 Gew.% bis 5 Gew.% der gesamten Seifenstückzusammensetzung vorhanden sind.

5. Zusammensetzung nach Anspruch 2, wobei das Bienenwachs in der Kombination von Bienenwachs, Sonnenblumenöl und Myristyl Myristat in einer Menge von 25 Gew.% bis 37 Gew.% vorhanden ist und wobei gegebenenfalls das Bienenwachs in der Kombination von Bienenwachs, Sonnenblumenöl und Myristyl Myristat in einer Menge von 28 Gew.% bis 34 Gew.% vorhanden ist.

6. Zusammensetzung nach Anspruch 2, wobei das Sonnenblumenöl in der Kombination von Bienenwachs, Sonnenblumenöl und Myristyl Myristat in einer Menge von 7 Gew.% bis 47 Gew.% vorhanden ist.

7. Zusammensetzung nach Anspruch 2, wobei das Myristyl Myristat in der Kombination von Bienenwachs, Sonnenblumenöl und Myristyl Myristat in einer Menge von 15 Gew.% bis 24 Gew.% vorhanden ist.

8. Zusammensetzung nach Anspruch 2, die weiterhin Propylenglykol umfasst, wobei Propylenglykol in der Kombination von Bienenwachs, Sonnenblumenöl und Myristyl Myristat gegebenenfalls in einer Menge von 2 Gew.% bis 3 Gew.% vorhanden ist.

9. Zusammensetzung nach Anspruch 2, die weiterhin ein hydrophobes Zusatzmittel enthält, wobei das hydrophobe Zusatzmittel in der Kombination von Bienenwachs, Sonnenblumenöl und Myristyl Myristat gegebenenfalls in einer Menge von 0,001 Gew.% bis 10 Gew.% vorhanden ist.

10. Zusammensetzung nach Anspruch 1, die weiterhin Titanoxid in einer Menge von 0,1 Gew.% bis 1 Gew.% umfasst.

11. Zusammensetzung nach Anspruch 1, die weiterhin Chromoxidgrün umfasst.

12. Zusammensetzung nach Anspruch 2, wobei eine Kombination von Bienenwachs, Sonnenblumenöl und Myristyl Myristat Bienenwachs in einer Menge von 28 Gew.% bis 34 Gew.%, Sonnenblumenöl in einer Menge von 7 Gew.% bis 47 Gew.%, Myristyl Myristat in einer Menge von 15 Gew.% bis 24 Gew.%, Propylenglykol in einer Menge von 2 Gew.% bis 3 Gew.% und gegebenenfalls ein hydrophobes Zusatzmittel umfasst.

13. Zusammensetzung nach Anspruch 1, wobei das Seifenstück ein Stück mit einer einzelnen Phase, einer dualen Phase, ein gestreiftes Seifenstück oder ein marmoriertes Seifenstück ist.

14. Verfahren zur Herstellung eines Seifenstücks, bei dem
a) ein Wachs mit einem Schmelzpunkt von 50°C bis 75°C bis zum Schmelzen unter Herstellung einer geschmolzenen Wachslösung erwärmt wird,
b) Sonnenblumenöl, Myristyl Myristat und gegebenenfalls mindestens ein Material in die Wachslösung unter Erwärmung eingebracht werden, das aus Propylenglykol und einem hydrophoben Zusatzmittel ausgewählt ist,
c) gerührt wird, um eine homogene Lösung zu erhalten,
d) die Lösung abgekühlt wird,
e) die homogene Lösung während der Extrusion zu einer Seifenkomponente zugefügt wird,
f) zur Bildung eines Seifenstücks extrudiert wird.

15. Verfahren nach Anspruch 14, wobei das Wachs Bienenwachs ist.

## Revendications

1. Composition de pain nettoyant comprenant :
a) un savon ; et
b) une cire ayant un point de fusion de 50 °C à 75 °C, de l'huile de tournesol et du myristate de myristyle.

2. Composition selon la revendication 1, dans laquelle la cire est de la cire d'abeille.

3. Composition selon la revendication 2, dans laquelle la cire d'abeille et l'huile de tournesol sont dans un rapport de 1:1 à 1:6.

4. Composition selon la revendication 2, dans laquelle la cire d'abeille, l'huile de tournesol et le myristate de myristyle sont présents en combinaison, en une quantité de 1 % à 5 % en poids de la composition de pain nettoyant totale.

5. Composition selon la revendication 2, dans laquelle la cire d'abeille est présente dans la combinaison de cire d'abeille, d'huile de tournesol et de myristate de myristyle en une quantité de 25 à 37 % en poids, facultativement dans laquelle la cire d'abeille est présente dans la combinaison de cire d'abeille, d'huile de tournesol et de myristate de myristyle en une quantité de 28 % à 34 % en poids.

6. Composition selon la revendication 2, dans laquelle l'huile de tournesol est présente dans la combinaison de cire d'abeille, d'huile de tournesol et de myristate de myristyle en une quantité de 7 % à 47 % en poids.

7. Composition selon la revendication 2, dans laquelle le myristate de myristyle est présent dans la combinaison de cire d'abeille, d'huile de tournesol et de myristate de myristyle en une quantité de 15 % à 24 % en poids.

8. Composition selon la revendication 2, comprenant en outre du propylèneglycol, facultativement dans laquelle le propylèneglycol est présent dans la combinaison de cire d'abeille, d'huile de tournesol et de myristate de myristyle en une quantité de 2 % à 3 % en poids.

9. Composition selon la revendication 2, comprenant en outre un agent bénéfique hydrophobe, facultativement dans laquelle l'agent bénéfique hydrophobe est présent dans la combinaison de cire d'abeille, d'huile de tournesol et de myristate de myristyle en une quantité de 0,001 % à 10 % en poids.

10. Composition selon la revendication 1, comprenant en outre de l'oxyde de titane en une quantité de 0,1 % à 1 % en poids.

11. Composition selon la revendication 1, comprenant en outre du vert d'oxyde de chrome.

12. Composition selon la revendication 2, dans laquelle une combinaison de cire d'abeille, d'huile de tournesol et de myristate de myristyle comprend de la cire d'abeille en une quantité de 28 % à 34 % en poids ; de l'huile de tournesol en une quantité de 7 % à 47 % en poids ; du myristate de myristyle en une quantité de 15 % à 24 % en poids ; du propylèneglycol en une quantité de 2 % à 3 % en poids, et facultativement un agent bénéfique hydrophobe.

13. Composition selon la revendication 1, dans laquelle le pain est l'un d'un pain monophasique, un pain biphasique, un pain strié, ou un pain marbré.

14. Procédé de préparation d'un pain nettoyant comprenant :
a) le chauffage d'une cire ayant un point de fusion de 50 °C à 75 °C jusqu'à la fusion et la création d'une solution de cire fondue ;
b) l'introduction d'huile de tournesol, de myristate de myristyle, et facultativement d'au moins un matériau choisi parmi le propylèneglycol et un agent bénéfique hydrophobe dans la solution de cire fondue sous chauffage ;
c) l'agitation pour obtenir une solution homogène ;
d) le refroidissement de la solution ;
e) l'introduction de la solution homogène dans un composant de savon pendant l'extrusion ; et
f) l'extrusion pour former un pain nettoyant.

15. Procédé selon la revendication 14, dans lequel la cire est de la cire d'abeille.
